(19) **Europäisches Patentamt / European Patent Office / Office européen des brevets**

(11) **EP 2 953 270 B1**

(12) **FASCICULE DE BREVET EUROPEEN**

(45) Date de publication et mention de la délivrance du brevet:
**15.03.2017 Bulletin 2017/11**

(51) Int Cl.:
**H04B 3/54** *(2006.01)*    **H04W 84/18** *(2009.01)*

(21) Numéro de dépôt: **15170279.2**

(22) Date de dépôt: **02.06.2015**

(54) **PROCÉDÉ DE SÉLECTION DE DISPOSITIF NOEUD PARENT DANS UN RÉSEAU DE COMMUNICATION SOUS FORME D'ARBRE**

VERFAHREN ZUR AUSWAHL EINER ELTERNKNOTEN-VORRICHTUNG IN EINEM BAUMFÖRMIGEN KOMMUNIKATIONSNETZ

METHOD FOR SELECTING A PARENT NODE DEVICE IN A TREE-SHAPED COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2014 FR 1455018**

(43) Date de publication de la demande:
**09.12.2015 Bulletin 2015/50**

(73) Titulaire: **SAGEMCOM ENERGY & TELECOM SAS 92500 Rueil-Malmaison (FR)**

(72) Inventeurs:
• **Teboulle, Henri**
  **92500 Rueil Malmaison (FR)**
• **Sergi, Jérémie**
  **92500 Rueil Malmaison (FR)**
• **Moro, Paolo**
  **92500 Rueil Malmaison (FR)**

(74) Mandataire: **Le Guen-Maillet**
  **5, place de Newquay**
  **BP 70250**
  **35802 Dinard Cedex (FR)**

(56) Documents cités:
**US-A1- 2011 063 999    US-A1- 2011 111 766**
**US-A1- 2012 294 377**

• **IBERDROLA ET AL: "G.hnem: PRIME Specification Revision 1.3E;TD10GS1-039", ITU-T DRAFT ; STUDY PERIOD 2009-2012, INTERNATIONAL TELECOMMUNICATION UNION, GENEVA ; CH, vol. 4/15, 9 juillet 2010 (2010-07-09), pages 1-257, XP017596870,**

**Description**

La présente invention concerne une sélection de dispositif noeud parent dans un réseau de communication sous forme d'arbre de dispositifs noeuds implémenté sur un réseau d'alimentation électrique.

Les communications par courants porteurs en ligne PLC (« PowerLine Communications » en anglais) se développent, notamment dans le cadre des réseaux d'alimentation électrique de type AMM (« Automated Meter Management » en anglais). Des réseaux de communication sont ainsi implémentés au dessus de réseaux d'alimentation électrique pour la collecte automatisée, auprès de compteurs électriques intelligents (« smart meters » en anglais), de données de relevés de consommation énergétique.

De tels réseaux de communication peuvent avoir une forme d'arbre pour permettre d'étendre la portée des communications. C'est le cas par exemple dans les spécifications PRIME (« PoweRline Intelligent Metering Evolution » en anglais). Les dispositifs d'un tel réseau de communication sont généralement appelés *noeuds.* Un dispositif noeud tient le rôle de racine du réseau de communication et gère le réseau de communication de manière à organiser le partage d'un même support de communication : émission de balises de synchronisation, gestion de topologie,... Des dispositifs noeuds servent alors de relais pour le compte d'autres dispositifs noeuds du réseau de communication lorsque ces derniers n'arrivent pas à recevoir directement des informations du dispositif noeud racine, et à transmettre directement des informations au dispositif noeud racine. On dit alors que le réseau de communication est hiérarchisé. Dans les spécifications PRIME, un dispositif concentrateur de données (« data concentrator » en anglais), parfois appelé *noeud de base* (« base node » en anglais) a le rôle de dispositif noeud racine, et des compteurs électriques, appelés *noeuds commutateurs* (« switch node » en anglais), prennent le rôle de relais entre le dispositif concentrateur de données et d'autres compteurs électriques, appelés *noeuds terminaux* (« terminal node » en anglais). Plusieurs relais peuvent ainsi être nécessaires pour permettre à un dispositif noeud terminal de communiquer avec le dispositif noeud racine. Cette hiérarchie du réseau de communication définit alors une direction ascendante de transmission, à savoir d'un dispositif noeud commutateur ou terminal vers le dispositif concentrateur de données, éventuellement via un ou plusieurs dispositifs noeuds commutateurs. Cette hiérarchie du réseau de communication définit aussi une direction inverse de transmission, qualifiée de *descendante.* Un premier dispositif noeud servant de relais pour le compte d'un second dispositif noeud est qualifié de *parent,* alors que, dans cette relation inter-noeud, le second dispositif noeud est qualifié d'*enfant.* On dit aussi que le second dispositif noeud est rattaché au premier dispositif noeud.

Il est alors souhaitable de fournir une solution qui permette à un dispositif noeud d'un tel réseau de communication de se rattacher à un dispositif noeud parent qui permette d'assurer une stabilité dans le temps de la hiérarchie du réseau de communication. La demande de brevet US 2012/294377 divulgue une solution de l'état de la technique.

La présente invention concerne un procédé de sélection de dispositif noeud parent dans un réseau de communication sous forme d'arbre de dispositifs noeuds implémenté sur un réseau d'alimentation électrique, des dispositifs noeuds pouvant être relais entre un dispositif noeud racine de l'arbre et d'autres dispositifs noeuds qui leur sont respectivement rattachés. Le procédé est tel qu'au moins un premier dispositif noeud effectue les étapes suivantes : obtenir, auprès de plusieurs seconds dispositif noeuds pouvant prendre un rôle de dispositif noeud parent pour ledit dispositif noeud au sein du réseau de communication, des premières informations de qualité de réception et de niveau de réception vis-à-vis de signaux émis par le premier dispositif noeud et reçus par les seconds dispositifs noeuds ; obtenir des secondes informations de qualité de réception et de niveau de réception vis-à-vis de signaux émis par chaque second dispositif noeud et reçus par le premier dispositif noeud ; et sélectionner le dispositif noeud parent parmi lesdits seconds dispositifs noeuds, en fonction desdites premières et secondes informations obtenues. Ainsi, grâce auxdites premières et secondes informations obtenues, le dispositif noeud améliore la stabilité dans le temps de la hiérarchie (liée à la forme d'arbre) du réseau de communication.

Selon un mode de réalisation particulier, pour sélectionner le dispositif noeud parent, le premier dispositif noeud effectue les étapes suivantes : déterminer, pour chaque second noeud, un minimum de qualité de réception entre la première information de qualité de réception et la seconde information de qualité de réception ; et sélectionner comme dispositif noeud parent le second dispositif noeud pour lequel la première information de niveau de réception est représentative d'un niveau de réception supérieur à un seuil prédéfini, pour lequel la seconde information de niveau de réception est aussi représentative d'un niveau de réception supérieur au seuil prédéfini, et pour lequel ledit minimum déterminé est le maximum parmi lesdits minimums déterminés.

Selon un mode de réalisation particulier, le premier dispositif noeud obtient lesdites premières informations de qualité de réception et de niveau de réception par envoi d'une requête, et lesdites premières informations correspondent à une qualité de réception et/ou un niveau de réception relatifs à ladite requête.

Selon un mode de réalisation particulier, lesdites secondes informations correspondent à une qualité de réception et/ou un niveau de réception relatifs à une réponse à ladite requête.

Selon un mode de réalisation particulier, lesdites premières informations correspondent à une qualité de réception et/ou un niveau de réception relatifs à des signaux transmis par le premier dispositif noeud et reçus par ledit second dispositif noeud parent sur une fenêtre glissante prédéfinie, et lesdites secondes informations correspondent à une qualité de réception et/ou un niveau de réception relatifs à des signaux transmis par ledit second dispositif noeud et reçus par le premier dispositif noeud sur la fenêtre glissante prédéfinie.

Selon un mode de réalisation particulier, ledit procédé est périodiquement réitéré.

Selon un mode de réalisation particulier, le premier dispositif noeud étant rattaché à un dispositif noeud parent dans le réseau de communication, le premier dispositif noeud obtient lesdites premières et secondes informations vis-à-vis du dispositif noeud parent et vis-à-vis d'au moins un dispositif noeud éligible comme parent, et le premier dispositif noeud décide de changer ou pas de dispositif noeud parent en fonction desdites premières et secondes informations obtenues.

Selon un mode de réalisation particulier, des phénomènes de diaphonie pouvant apparaître, chaque transmission dans le réseau de communication en direction du dispositif noeud racine étant ascendante et chaque transmission en direction inverse étant descendante, le premier dispositif noeud effectue les étapes suivantes : obtenir auprès du dispositif noeud parent lesdites premières informations de qualité de réception et de niveau de réception ; utiliser, pour transmettre des signaux dans le cadre des transmissions descendantes, un niveau d'émission figé à un niveau d'émission maximum dudit dispositif noeud ; et ajuster, en fonction desdites informations obtenues, un niveau d'émission dudit dispositif noeud utilisé pour transmettre (604) des signaux dans le cadre des transmissions ascendantes, de sorte à continuer de permettre audit dispositif noeud parent de recevoir lesdits signaux tout en minimisant des interférences liées aux phénomènes de diaphonie.

Selon un mode de réalisation particulier, la première information de qualité de réception obtenue auprès du dispositif noeud parent est une information de rapport signal-à-bruit, le premier dispositif noeud détermine le niveau d'émission V à appliquer dans le cadre de transmissions ascendantes de la manière suivante :

$$\begin{cases} V = N\_Tx\_U - min\,((SNR - SNR\_OK), (RX\_LV - RX\_LV\_OK)) \\ \quad avec, si\ V > N\_Tx\_Max, V = N\_Tx\_Max \\ \quad et\ si\ V < N\_Tx\_Min, V = N\_Tx\_Min \end{cases}$$

où V est exprimé en décibels-microvolts et où : SNR, exprimé en décibels, est l'information de rapport signal-à-bruit ; RX\_LV, exprimé en décibels-microvolts, est la première information de niveau de réception obtenue auprès du dispositif noeud parent ; N\_Tx\_U, exprimé en décibels-microvolts, est le niveau d'émission utilisé par le premier dispositif noeud pour émettre les signaux auxquels les informations SNR et RX\_LV sont relatives ; SNR\_OK, exprimé en décibels, est un seuil de rapport signal-à-bruit en dessous duquel il est considéré que la transmission concernée présente des risques non acceptables d'échec ; RX\_LV\_OK, exprimé en décibels-microvolts, est ledit seuil prédéfini ; N\_Tx\_Max est le niveau d'émission maximum ; et N\_Tx\_Min est un niveau d'émission minimum pour transmettre des données dans le réseau de communication.

Selon un mode de réalisation particulier, le premier dispositif noeud étant déconnecté du réseau de communication, le premier dispositif noeud diffuse une requête représentative d'une demande d'obtention desdites premières informations et sélectionne le dispositif noeud parent pour intégrer ou réintégrer le réseau de communication parmi lesdits seconds dispositifs noeuds, en fonction desdites premières et secondes informations obtenues.

L'invention concerne également un dispositif noeud destiné à être utilisé dans un réseau de communication sous forme d'arbre de dispositifs noeuds implémenté sur un réseau d'alimentation électrique, des dispositifs noeuds pouvant être relais entre un dispositif noeud racine de l'arbre et d'autres dispositifs noeuds qui leur sont respectivement rattachés. Le dispositif noeud, dit premier dispositif noeud, est tel qu'il comporte : des moyens pour obtenir, auprès de plusieurs seconds dispositif noeuds pouvant prendre un rôle de dispositif noeud parent pour le premier dispositif noeud au sein du réseau de communication, des premières informations de qualité de réception et de niveau de réception vis-à-vis de signaux émis par le premier dispositif noeud et reçus par les seconds dispositifs noeuds ; des moyens pour obtenir des secondes informations de qualité de réception et de niveau de réception vis-à-vis de signaux émis par chaque second dispositif noeud et reçus par le premier dispositif noeud ; et des moyens pour sélectionner le dispositif noeud parent parmi lesdits seconds dispositifs noeuds, en fonction desdites premières et secondes informations obtenues.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un réseau de communication implémenté sur un réseau d'alimentation électrique, dans lequel l'invention peut être mise en oeuvre ;
- la Fig. 2 illustre schématiquement un exemple d'architecture matérielle d'un dispositif noeud du réseau de communication ;
- la Fig. 3 illustre schématiquement un algorithme, mis en oeuvre par un dispositif noeud du réseau de communication, de re-sélection éventuelle d'un dispositif noeud parent dans le réseau de communication ;
- la Fig. 4 illustre schématiquement un format de paquet émis dans le réseau de communication ;
- la Fig. 5 illustre schématiquement un algorithme, mis en oeuvre par un dispositif noeud désireux d'intégrer (ou de réintégrer) le réseau de communication, de sélection d'un dispositif noeud parent dans le réseau de communication ;
- la Fig. 6 illustre schématiquement un algorithme de transmission de données, mis en oeuvre par un dispositif noeud du réseau de communication ;
- la Fig. 7 illustre schématiquement un algorithme, mis en oeuvre par un dispositif noeud du réseau de communication, de traitement d'un message de requête d'informations de qualité de réception et de niveau de réception ;
- la Fig. 8 illustre schématiquement un algorithme, mis en oeuvre par un dispositif noeud du réseau de communication, de traitement d'un message de réponse incluant des informations de qualité de réception et de niveau de réception ; et
- la Fig. 9 illustre schématiquement un algorithme, mis en oeuvre par un dispositif noeud du réseau de communication, de configuration d'une interface de transmission de données dudit dispositif noeud.

La description qui suit détaille la présente invention dans le cadre d'un réseau de communication en arbre qui est implémenté sur un réseau d'alimentation électrique, afin de mettre en oeuvre des services de type AMM, et qui est plus particulièrement conforme aux spécifications PRIME (à l'exception d'échanges de messages incluant des informations de qualité de réception de signal et de niveau de réception de signal (« Received Signal Strength » en anglais), et d'opérations de traitement desdites informations, qui sont introduits dans le cadre de la présente invention). Il convient toutefois de noter que la présente invention s'applique à tout réseau de communication en arbre (donc hiérarchisé) dont la structure (hiérarchie) est amenée à évoluer notamment en fonction d'interférences rencontrées au fil des transmissions.

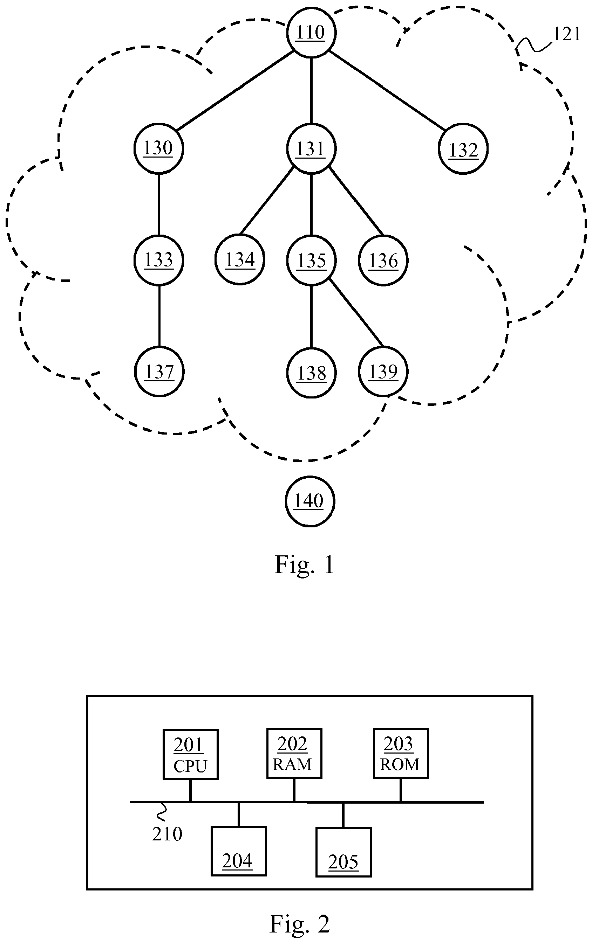

La Fig. 1 illustre schématiquement un réseau de communication 121 sous forme d'arbre implémenté sur un réseau d'alimentation électrique, dans lequel l'invention peut être mise en oeuvre.

Le réseau de communication 121 est en forme d'arbre dont un dispositif noeud particulier 110, appelé *dispositif concentrateur,* est la racine. Le réseau de communication 121 est ainsi hiérarchisé et est destiné à permettre de connecter une pluralité de dispositifs noeuds au dispositif concentrateur 110. Dans le cadre de la Fig. 1, les dispositifs noeuds que le réseau de communication 121 vise à connecter au dispositif concentrateur 110 sont des compteurs électriques intelligents. Le réseau de communication 121 permet ainsi d'établir des communications à courants porteurs en ligne PLC.

Etant donnée la portée des communications à courants porteurs en ligne PLC, des dispositifs noeuds commutateurs joue le rôle de relais entre des dispositifs noeuds terminaux (qui ne jouent pas le rôle de relais) et le dispositif concentrateur 110. Certaines communications entre des dispositifs noeuds terminaux et le dispositif concentrateur 110 peuvent nécessiter plusieurs relais successifs. Cela définit donc des rattachements de dispositifs noeuds les uns aux autres pour former l'arbre constituant le réseau de communication 121. Un dispositif noeud qui n'est pas rattaché au réseau de communication 121 est un dispositif déconnecté (« disconnected » en anglais).

Cette situation est présentée sur la Fig. 1. Un dispositif noeud terminal 132 est directement rattaché au dispositif concentrateur 110. Deux autres dispositifs noeuds 130 et 131 sont aussi directement rattachés au dispositif concentrateur 110. Ces deux dispositifs noeuds 130 et 131 jouent le rôle de relais entre le dispositif concentrateur 110 et d'autres dispositifs noeuds. Le dispositif noeud 130 joue le rôle de relais entre le dispositif concentrateur 110 et un dispositif noeud 133 qui, lui-même, joue le rôle de relais entre le dispositif noeud 130 et un dispositif noeud terminal 137. Les communications entre le dispositif concentrateur 110 et le dispositif noeud terminal 137 passent donc par deux relais successifs, à savoir les dispositifs noeuds relais 130 et 133. Le dispositif noeud 131 joue le rôle de relais entre le dispositif concentrateur 110 et trois autres dispositifs noeuds 134, 135 et 136. Les dispositifs noeuds 134 et 136 sont des dispositifs noeuds terminaux, et le dispositif noeud 135 joue le rôle de relais entre le dispositif noeud 131 et deux dispositifs noeuds terminaux 138 et 139.

La Fig. 1 montre aussi un dispositif noeud 140, qui est un dispositif déconnecté.

Il faut comprendre que la topologie du réseau de communication 121 n'est pas figée. La Fig. 1 représente la topologie du réseau de communication 121 à un instant donné. A cause notamment des phénomènes de diaphonie et autres interférences, des dispositifs noeuds peuvent se trouver déconnectés du réseau de communication 121 et cherchent alors à se reconnecter au réseau de communication 121. La topologie du réseau de communication 121 après reconnexion est alors probablement différente de la topologie du réseau de communication 121 avant déconnexion. La diaphonie est un phénomène qui permet à des signaux, typiquement par couplage capacitif, de se propager sans passer par des paires de cuivre proprement dites, mais par des liens parasites non visibles. Les phénomènes de diaphonie sont instables dans le temps, car pouvant varier en fonction de la température ou de l'activité sur le réseau de communication par courants porteurs en ligne PLC. A noter qu'il peut également des phénomènes de diaphonie au sein d'un même appareil, via des liaisons cuivre sur circuits imprimés et/ou via certains composants qui constituent ledit appareil.

Les communications dans le réseau de communication 121 s'effectuent préférentiellement sous la forme de trames décomposées en trois parties.

Une première partie de chaque trame est dédiée à l'émission périodique de balises (« beacons » en anglais). Ces balises contiennent des informations servant, entre autre, à la découverte et à la synchronisation du réseau de communication 121. Plusieurs intervalles de temps (« time slots » en anglais) sont définis dans ladite première partie de chaque trame : un intervalle de temps est dédié à l'émission de balises par le dispositif concentrateur 110, et les autres intervalles de temps sont dédiés à l'émission périodique de balises par les dispositifs noeuds commutateurs, afin de permettre aux dispositifs noeuds respectivement rattachés auxdits dispositifs noeuds commutateurs de se synchroniser. Le dispositif concentrateur 110 est en charge d'attribuer un intervalle de temps de ladite première partie de chaque trame (ainsi qu'une fréquence d'émission) à chaque dispositif noeud commutateur.

Une seconde partie de chaque trame est dédiée aux communications par tous les dispositifs noeuds du réseau de communication. Un mécanisme de type CSMA/CA (« Carrier Sense Multiple Access / Collision Avoidance » en anglais) est mis en oeuvre, sans option RTS/CTS (« Request-To-Send / Clear-To-Send » en anglais). Lorsqu'un dispositif noeud doit envoyer un paquet ou un message, ledit dispositif noeud détecte l'état d'occupation du support de communication (*i.e.* canal de transmission) et décide ou non d'envoyer le paquet ou le message en conséquence. Un délai aléatoire à appliquer indépendamment, depuis le début de ladite seconde partie de trame, par chaque dispositif noeud désireux d'émettre, permet de limiter le risque de collision.

Une troisième partie de chaque trame est dédiée aux communications par des dispositifs noeuds spécifiques du réseau de communication 121. On retrouve une telle troisième partie de trame dans les spécifications PRIME sous l'acronyme CFP (« Contention-Free Period » en anglais).

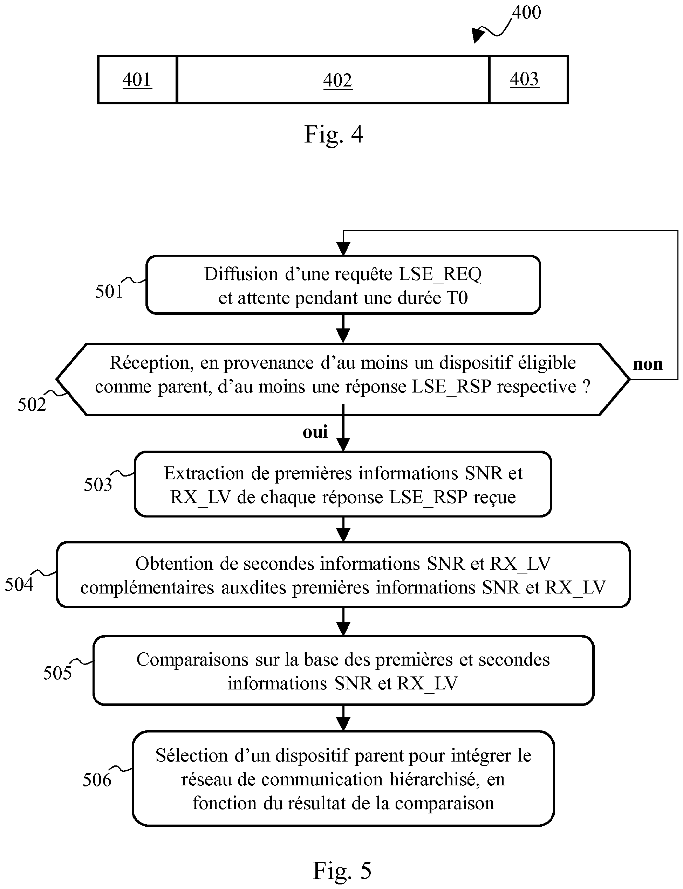

Les messages auxquels il est fait référence dans la suite du document sont ainsi échangés sous forme de paquets dans la seconde partie de trame, par application du mécanisme de type CSMA/CA. Ces messages reposent préférentiellement sur un format de paquet, compatible avec les spécifications PRIME et décrit ci-après en relation avec la Fig. 4.

La Fig. 2 illustre schématiquement un exemple d'architecture matérielle d'un dispositif noeud du réseau de communication 121, que ce soit le dispositif concentrateur 110, un dispositif noeud commutateur ou un dispositif noeud terminal.

Considérons à titre illustratif que la Fig. 2 représente schématiquement l'architecture du dispositif noeud commutateur 135. Le dispositif noeud commutateur 135 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ; une interface d'émission-réception (« transceiver interface » en anglais) 205 de signaux courants porteurs en ligne PLC, permettant au dispositif noeud commutateur 135 de communiquer au sein du réseau de communication 121.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif noeud commutateur 135 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, par exemple un processeur, un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

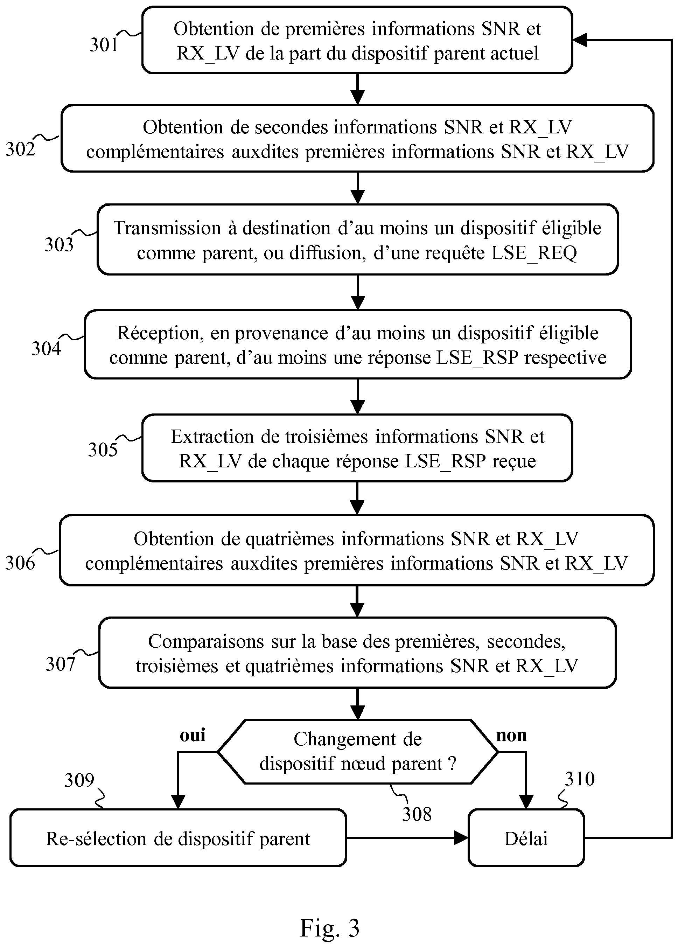

La Fig. 3 illustre schématiquement un algorithme, mis en oeuvre par un dispositif noeud du réseau de communication 121, de re-sélection éventuelle d'un dispositif noeud parent dans le réseau de communication 121.

Il est considéré, au démarrage de l'algorithme de la Fig. 3, que ledit dispositif noeud est rattaché à un dispositif noeud parent dans le réseau de communication 121.

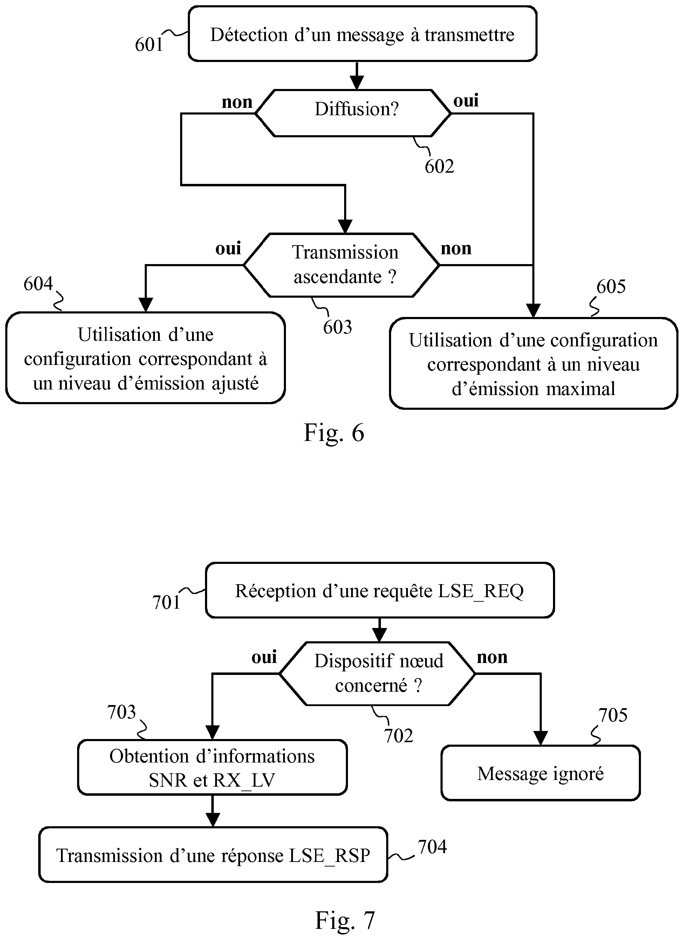

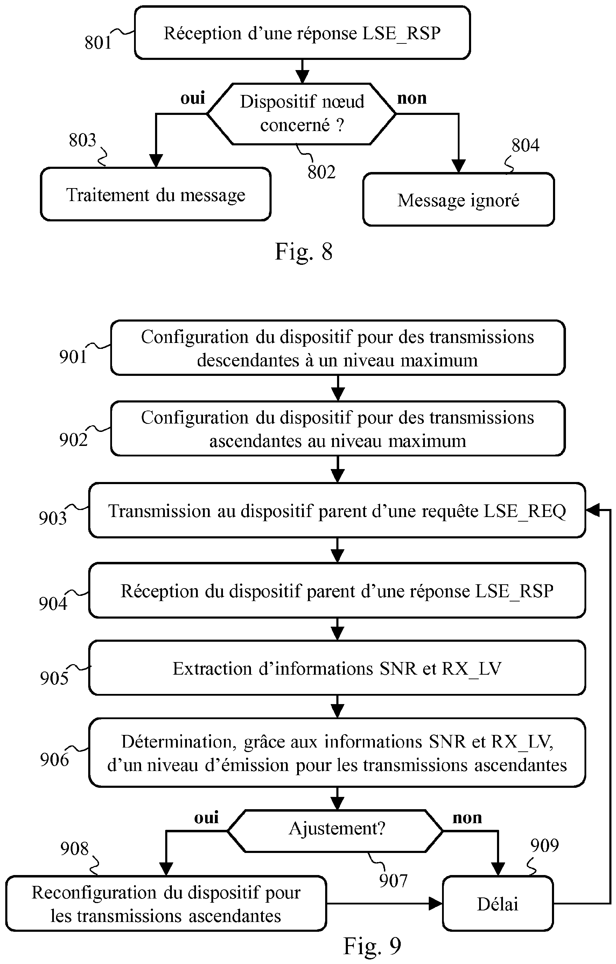

Dans une étape 301, le dispositif noeud obtient des premières informations de qualité de réception (*e.g.* de rapport signal-à-bruit SNR) et de niveau de réception RX_LV de la part dudit dispositif noeud parent. Lesdites premières informations de qualité de réception et de niveau de réception RX_LV sont relatives à des signaux émis par ledit dispositif noeud et reçus par ledit dispositif noeud parent. Lesdites premières informations de qualité de réception et de niveau de réception RX_LV sont obtenues de la part dudit dispositif noeud parent par échange de messages LSE_REQ et LSE_RSP, comme par exemple détaillé ci-après en relation avec les Figs. 7 et 8.

Dans une étape 302, le dispositif noeud obtient des secondes informations de qualité de réception (*e.g.* de rapport signal-à-bruit SNR) et de niveau de réception RX_LV complémentaires auxdites premières informations de qualité de réception et de niveau de réception RX_LV. Lesdites secondes informations de qualité de réception et de niveau de réception RX_LV sont relatives à des signaux émis par ledit dispositif noeud parent et reçus par ledit dispositif noeud. Lesdites secondes informations de qualité de réception et de niveau de réception RX_LV sont complémentaires auxdites premières informations de qualité de réception et de niveau de réception RX_LV, dans le sens où lesdites premières et secondes informations de qualité de réception et de niveau de réception RX_LV permettent conjointement de déterminer les conditions de transmission bidirectionnelle entre ledit dispositif noeud et ledit dispositif noeud parent.

Dans une étape 303, le dispositif noeud diffuse (« broadcast » en anglais) une requête unique LSE_REQ. Cette requête LSE_REQ est représentative d'une demande d'obtention, auprès de tout dispositif noeud éligible comme parent dudit dispositif noeud, de troisièmes informations de qualité de réception (*e.g.* de rapport signal-à-bruit SNR) et de niveau de réception RX_LV vis-à-vis de signaux émis par ledit dispositif noeud et reçus par le dispositif noeud éligible comme parent. Cette requête LSE_REQ suit préférentiellement le format de paquet conforme aux spécifications PRIME, tel que décrit ci-après en relation avec la Fig. 4. Dans une variante de réalisation, lorsque le dispositif noeud a connaissance de la topologie du réseau de communication 121, le dispositif noeud transmet une requête LSE_REQ à chaque dispositif noeud éligible comme parent dudit dispositif noeud.

Dans une étape 304, le dispositif noeud reçoit, en provenance d'au moins un dispositif noeud éligible comme parent, une réponse respective LSE_RSP à chaque requête LSE_REQ transmise à l'étape 303. Chaque réponse LSE_RSP inclut les troisièmes informations de qualité de réception et de niveau de réception RX_LV demandées par ledit dispositif noeud par le biais de la requête LSE_REQ correspondante. Chaque réponse LSE_RSP suit préférentiellement le format de paquet conforme aux spécifications PRIME, tel que décrit ci-après en relation avec la Fig. 4. Grâce aux messages LSE_REQ et LSE_RSP échangés dans les étapes 303 et 304, le dispositif noeud obtient lesdites troisièmes informations de qualité de réception et de niveau de réception RX_LV demandées.

Dans une étape 305, le dispositif noeud extrait, de chaque réponse LSE_RSP, lesdites troisièmes informations de qualité de réception et de niveau de réception RX_LV transmises par le dispositif noeud éligible comme parent.

Dans une étape 306, le dispositif noeud obtient des quatrièmes informations de qualité de réception (*e.g.* de rapport signal-à-bruit SNR) et de niveau de réception RX_LV complémentaires auxdites troisièmes informations de qualité de réception et de niveau de réception RX_LV. Lesdites quatrièmes informations de qualité de réception et de niveau de réception RX_LV sont relatives à des signaux émis par ledit dispositif noeud éligible comme parent et reçus par ledit dispositif noeud. Lesdites quatrièmes informations de qualité de réception et de niveau de réception RX_LV sont complémentaires auxdites troisièmes informations de qualité de réception et de niveau de réception RX_LV, dans le sens où lesdites troisièmes et quatrièmes informations de qualité de réception et de niveau de réception RX_LV permettent conjointement de déterminer les conditions de transmission bidirectionnelle entre ledit dispositif noeud et chaque dispositif noeud éligible comme parent (autre que le dispositif noeud parent actuel).

Dans une étape 307, le dispositif noeud compare chaque information de niveau de réception RX_LV parmi lesdites premières, secondes, troisièmes et quatrièmes informations avec un seuil prédéfini RX_LV_OK. Le seuil prédéfini RX_LV_OK, exprimé en dB$\mu$V (décibels-microvolts), est un seuil de niveau de réception en dessous duquel il est considéré que la transmission concernée présente des risques non acceptables d'échec. Par exemple, le seuil prédéfini RX_LV_OK est fixé à 75 dB$\mu$V (décibels-microvolts). Le dispositif noeud part donc d'une liste de dispositifs noeuds parents potentiels, incluant le dispositif parent auquel ledit dispositif noeud est actuellement rattaché et chaque dispositif noeud éligible comme parent ayant transmis une réponse LSE_RSP reçue à l'étape 304. Le dispositif noeud exclut ensuite de la liste le dispositif noeud parent actuel, si le niveau de réception RX_LV indiqué dans lesdites premières informations est inférieur au seuil prédéfini RX_LV_OK ou si le niveau de réception RX_LV indiqué dans lesdites secondes informations est inférieur au seuil prédéfini RX_LV_OK. De plus, le dispositif noeud exclut de la liste chaque dispositif noeud éligible comme parent, si le niveau de réception RX_LV indiqué dans lesdites troisièmes informations relativement audit dispositif noeud éligible comme parent est inférieur au seuil prédéfini RX_LV_OK ou si le niveau de réception RX_LV indiqué dans lesdites quatrièmes informations relativement audit dispositif noeud éligible comme parent est inférieur au seuil prédéfini RX_LV_OK. Ensuite, le dispositif noeud détermine le minimum MIN_A entre la qualité de réception indiquée dans lesdites premières informations et la qualité de réception indiquée dans lesdites secondes informations. Puis, pour chaque dispositif noeud éligible comme parent restant dans la liste, le dispositif noeud détermine le minimum MIN_B entre la qualité de réception indiquée dans lesdites troisièmes informations relativement audit dispositif noeud éligible comme parent et la qualité de réception indiquée dans lesdites quatrièmes informations relativement audit dispositif noeud éligible.

Dans une étape 308, le dispositif noeud vérifie si un changement de dispositif noeud parent permettrait d'améliorer la stabilité du réseau de communication 121, c'est-à-dire si les conditions de transmission bidirectionnelle entre ledit dispositif noeud et un dispositif noeud éligible comme parent sont meilleures que les conditions de transmission bidirectionnelle entre ledit dispositif noeud et le dispositif noeud parent actuel. Il est considéré que les conditions de transmission bidirectionnelle entre ledit dispositif noeud et un dispositif noeud éligible comme parent sont meilleures que les conditions de transmission bidirectionnelle entre ledit dispositif noeud et le dispositif noeud parent actuel lorsque le minimum MIN_B relatif audit dispositif noeud éligible comme parent est supérieur au minimum MIN_A. Dans ce cas, il est souhaitable de choisir comme parent ledit dispositif noeud éligible comme parent.

Lorsqu'un changement de dispositif noeud parent permettrait d'améliorer la stabilité du réseau de communication 121, une étape 309 est effectuée ; sinon, une étape 310 est effectuée.

Dans l'étape 309, le dispositif noeud sélectionne un nouveau dispositif noeud parent parmi les dispositifs noeuds éligibles comme parents pour lesquels le minimum MIN_B relatif audit dispositif noeud éligible comme parent est supérieur au minimum MIN_A. Préférentiellement, le dispositif noeud sélectionne comme un nouveau dispositif noeud parent le dispositif noeud éligible comme parent pour lequel le minimum MIN_B est maximum parmi les dispositifs noeuds éligibles comme parents pour lesquels le minimum MIN_B relatif audit dispositif noeud éligible comme parent est supérieur au minimum MIN_A. Puis l'étape 310 est effectuée.

Dans l'étape 310, le dispositif noeud applique un délai prédéterminé, avant de réitérer l'étape 301. Il en découle que, selon l'algorithme de la Fig. 3, le dispositif noeud vérifie périodiquement la pertinence de la sélection du dispositif noeud parent. De manière alternative, il est possible de déclencher sur demande une réitération de l'algorithme de la Fig. 3 à partir de l'étape 301. La valeur du délai appliqué à l'étape 310 peut en outre être dynamiquement modifiée, par exemple en fonction d'une rapidité d'évolution des informations de qualité de réception et/ou de niveau de réception RX_LV au fil desdites réitérations de l'algorithme de la Fig. 3. L'application du délai à l'étape 310 est préférentiellement débrayable.

La Fig. 4 illustre schématiquement un format de paquet 400 émis dans le réseau de communication 121, lorsque les transmissions dans le réseau de communication 121 sont conformes aux spécifications PRIME. Comme déjà indiqué, de tels paquets sont transmis selon un mécanisme CSMA/CA, sans option RTS/CTS.

Le paquet 400 comporte un préambule 401, un entête 402 et des données utiles (« payload data » en anglais) 403.

Le préambule 401 est utilisé pour des besoins de synchronisation.

L'entête 402 comporte un champ, dénommé PKT.CTYPE dans les spécifications PRIME, indiquant le type du paquet 400. Les spécifications PRIME définissent actuellement dix types de paquets respectivement représentés par les valeurs 1 à 10 (en décimal). Un nouveau type de paquet, LSE, peut ainsi être défini, le type LSE recouvrant les requêtes LSE_REQ et les réponses LSE_RSP. La distinction entre requêtes LSE_REQ et réponses LSE_RSP peut alors être faite grâce à un bit dédié dans les données utiles 403 (bit à « 0 » dans le cas d'une requêtes LSE_REQ et bit à « 1 » dans le cas d'une réponse LSE_RSP).

L'entête 402 comporte en outre des champs, dénommés PKT.LNID et PKT.SID selon les spécifications PRIME, permettant d'indiquer, dans le cadre d'une transmission ascendante, un identifiant du dispositif noeud à l'origine du paquet 400 ; les champs PKT.LNID et PKT.SID permettent d'indiquer, dans le cadre d'une transmission descendante, un identifiant du dispositif noeud destinataire du paquet 400. Un dispositif noeud commutateur est alors en mesure de déterminer grâce aux champs PKT.LNID et PKT.SID, et par connaissance de la topologie du réseau de communication 121, si une requête LSE_REQ est issue d'un dispositif noeud enfant dudit dispositif noeud commutateur, et donc si la requête LSE_REQ est à traiter par ledit dispositif noeud commutateur. Un dispositif noeud est alors aussi en mesure de déterminer grâce aux champs PKT.LNID et PKT.SID, et par connaissance de la topologie du réseau de communication 121, si une réponse LSE_RSP est issue du dispositif noeud parent dudit dispositif noeud, et donc si la réponse LSE_RSP est à traiter par ledit dispositif noeud. Les champs PKT.LNID et PKT.SID peuvent aussi être utilisés pour diffuser (« broadcast » en anglais) des messages, et notamment des requêtes LSE_REQ et des réponses LSE_RSP. Les champs PKT.LNID et PKT.SID sont alors remplis avec une valeur prédéfinie (tous les bits à 1) non utilisée pour identifier les dispositifs noeuds dans le réseau de communication 121. Un champ LSE.EUI48 décrit ci-après est alors utilisé pour identifier le dispositif noeud ayant transmis la requête LSE_REQ que représente le paquet 400 ou en réponse de laquelle la réponse LSE_RSP que représente le paquet 400 a été générée. Une telle diffusion de requêtes LSE_REQ et de réponses LSE_RSP est particulièrement utile lorsqu'un dispositif noeud désireux d'intégrer ou de réintégrer le réseau de communication 121 cherche à déterminer à quel dispositif noeud éligible comme parent se rattacher, tel que décrit ci-après en relation avec la Fig. 5. On peut noter qu'un mécanisme similaire d'identification est d'ores et déjà mis en oeuvre dans les spécifications PRIME pour l'enregistrement d'un dispositif noeud dans un réseau de communication (*i.e.* échanges de messages dénommés REG-B et REG-S).

Lorsque le paquet 400 est une requête LSE_REQ ou une réponse LSE_RSP, les données utiles 403 contiennent en outre un champ, dénommé LSE.SNR, fournissant une information de qualité de réception de type rapport signal-à-bruit SNR. Par exemple, le champ LSE.SNR est encodé sur quatre bits et permet de fournir une indication de rapport signal-à-bruit SNR allant de 0 dB (décibel) à 15 dB (décibels), la valeur 15 dB (décibels) étant aussi utilisée pour des rapports signal-à-bruit supérieurs à 15 dB (décibels), et la valeur 0 dB (décibels) étant aussi utilisée pour des rapports signal-à-bruit inférieurs à 0 dB (décibels).

Lorsque le paquet 400 est une requête LSE_REQ ou une réponse LSE_RSP, les données utiles 403 contiennent en outre un champ, dénommé LSE.RX_LV, fournissant une information de niveau de réception RX_LV. Par exemple, le champ LSE.RX_LV est encodé sur huit bits et permet de fournir une indication de niveau de réception RX_LV allant de 0 dBμV (décibels-microvolts) à 255 dBμV (décibels-microvolts), la valeur 255 dBμV (décibels-microvolts) étant aussi utilisée pour des niveaux de réception RX_LV supérieurs à 255 dBμV (décibels-microvolts), et la valeur 0 dBμV (décibels-microvolts) étant aussi utilisée pour des niveaux de réception RX_LV inférieurs à 0 dBμV (décibels-microvolts).

Lorsque le paquet 400 est une requête LSE_REQ ou une réponse LSE_RSP, les données utiles 403 contiennent en outre préférentiellement le champ LSE.EUI48, fournissant une information représentative d'un identifiant unique du dispositif noeud ayant transmis la requête LSE_REQ que représente le paquet 400 ou en réponse de laquelle la réponse LSE_RSP que représente le paquet 400 a été générée.

Lorsque le paquet 400 est une requête LSE_REQ ou une réponse LSE_RSP, les données utiles 403 peuvent contenir un champ, dénommé LSE.SNR_TYPE, fournissant une information indiquant un type d'information de rapport signal-à-bruit qui est à indiquer ou respectivement indiquée dans le champ LSE.SNR, lorsque plusieurs types d'information de rapport signal-à-bruit sont possibles. Par exemple, un type est une mesure de rapport signal-à-bruit effectuée sur la requête LSE_REQ en réponse de laquelle la réponse LSE_RSP que représente le paquet 400 a été générée ; un second type est une moyenne de mesures de rapport signal-à-bruit effectuées sur une fenêtre glissante vis-à-vis de signaux reçus du dispositif noeud ayant généré la requête LSE_REQ en réponse de laquelle la réponse LSE_RSP que représente le paquet 400 a été générée.

Lorsque le paquet 400 est une requête LSE_REQ ou une réponse LSE_RSP, les données utiles 403 peuvent contenir un champ, dénommé LSE.RX_LV_TYPE, fournissant une information indiquant un type d'information de niveau de réception qui est à indiquer ou respectivement indiquée dans le champ LSE.RX_LV, lorsque plusieurs types d'information de niveau de réception sont possibles. Par exemple, un premier type est une mesure de niveau de réception effectuée sur la requête LSE_REQ en réponse de laquelle la réponse LSE_RSP que représente le paquet 400 a été générée ; un second type est une moyenne de mesures de niveau de réception effectuées sur une fenêtre glissante vis-à-vis de signaux reçus du dispositif noeud ayant généré la requête LSE_REQ en réponse de laquelle la réponse LSE_RSP que représente le paquet 400 a été générée. Dans un mode de réalisation particulier, les champs LSE.SNR_TYPE et LSE.RX_LV_TYPE peuvent être fusionnés en un unique champ LSE.DATA_TYPE, les sélections de type d'information de rapport signal-à-bruit et de type d'information de niveau de réception s'effectuant alors conjointement, e.g. mesure sur réception de la requête LSE_REQ ou moyenne de mesures sur une fenêtre glissante.

Dans un mode de réalisation particulier, lorsque le paquet 400 est une requête LSE_REQ, les données utiles 403 peuvent contenir un champ, dénommé LSE.REQ_DATA, fournissant une information indiquant si ladite requête LSE_REQ contient en outre des informations complémentaires de qualité de réception et de niveau de réception que le dispositif noeud ayant généré la requête LSE_REQ souhaite fournir au dispositif noeud auquel ladite requête LSE_REQ est adressée. Ces informations complémentaires de qualité de réception et de niveau de réception sont représentatives d'une qualité de réception et d'un niveau de réception de signaux qui ont été émis par le dispositif noeud auquel ladite requête LSE_REQ est adressée et qui ont été reçus par le dispositif noeud ayant généré ladite requête LSE_REQ. Cela suppose que la requête LSE_REQ ne soit pas diffusée, mais adressée spécifiquement à un dispositif noeud. Cela suppose aussi que lesdites informations complémentaires de qualité de réception et de niveau de réception sont relatives à des signaux transmis avant la transmission de ladite requête LSE_REQ. Les champs LSE.SNR et LSE.RX_LV contiennent alors respectivement lesdites informations complémentaires de qualité de réception et de niveau de réception.

La Fig. 5 illustre schématiquement un algorithme, mis en oeuvre par un dispositif noeud désireux d'intégrer ou de réintégrer le réseau de communication 121, de sélection d'un dispositif noeud parent dans le réseau de communication 121. Il est considéré, au démarrage de l'algorithme de la Fig. 5, que ledit dispositif noeud est déconnecté du réseau de communication 121.

Dans une étape 501, le dispositif noeud diffuse une requête LSE_REQ et attend une durée prédéfinie T0 (par exemple T0 = 30 secondes) avant de passer à une étape 502. La requête LSE_REQ diffusée n'est pas adressée à un dispositif noeud en particulier. Tout dispositif noeud éligible comme parent (*i.e.* tout dispositif noeud commutateur ou pouvant prendre le rôle de dispositif noeud commutateur) recevant la requête LSE_REQ diffusée est supposé répondre à ladite requête LSE_REQ par diffusion d'une réponse LSE_RSP. La requête LSE_REQ diffusée est représentative d'une demande d'obtention de premières informations de qualité de réception (*e.g.* de rapport signal-à-bruit SNR) et de niveau de réception RX_LV vis-à-vis de signaux émis par ledit dispositif noeud et reçus par le dispositif noeud éligible comme parent qui reçoit ladite requête LSE_REQ. La requête LSE_REQ diffusée suit préférentiellement le format de paquet conforme aux spécifications PRIME, tel que déjà décrit en relation avec la Fig. 4.

Dans l'étape 502, le dispositif noeud vérifie si le dispositif noeud a reçu, en provenance d'au moins un dispositif noeud éligible comme parent, une réponse respective LSE_RSP à la requête LSE_REQ diffusée à l'étape 501. Chaque réponse LSE_RSP reçue inclut les premières informations de qualité de réception et de niveau de réception RX_LV demandées par ledit dispositif noeud par le biais de la requête LSE_REQ diffusée à l'étape 501. Chaque réponse LSE_RSP reçue suit préférentiellement le format de paquet conforme aux spécifications PRIME, tel que déjà décrit en relation avec la Fig. 4. Grâce aux messages LSE_REQ et LSE_RSP échangés dans les étapes 501 et 502, le dispositif noeud obtient lesdites premières informations de qualité de réception et de niveau de réception RX_LV demandées. Si le dispositif noeud a reçu au moins une telle réponse LSE_RSP, une étape 503 est effectuée ; sinon, l'étape 501 est réitérée.

Dans l'étape 503, le dispositif noeud extrait, de chaque réponse LSE_RSP, lesdites premières informations de qualité de réception et de niveau de réception RX_LV transmises par le dispositif noeud éligible comme parent.

Dans une étape 504, le dispositif noeud obtient des secondes informations de qualité de réception (*e.g.* de rapport signal-à-bruit SNR) et de niveau de réception RX_LV complémentaires auxdites premières informations de qualité de réception et de niveau de réception RX_LV. Lesdites secondes informations de qualité de réception et de niveau de réception RX_LV sont relatives à des signaux émis par ledit dispositif noeud éligible comme parent et reçus par ledit dispositif noeud. Lesdites secondes informations de qualité de réception et de niveau de réception RX_LV sont complémentaires auxdites premières informations de qualité de réception et de niveau de réception RX_LV, dans le sens où lesdites premières et secondes informations de qualité de réception et de niveau de réception RX_LV permettent conjointement de déterminer les conditions de transmission bidirectionnelle entre ledit dispositif noeud et chaque dispositif noeud éligible comme parent.

Dans une étape 505, le dispositif noeud compare chaque information de niveau de réception RX_LV parmi lesdites premières et secondes informations avec le premier seuil prédéfini RX_LV_OK déjà mentionné en relation avec la Fig. 3. Le dispositif noeud part donc d'une liste de dispositifs noeuds parents potentiels, incluant chaque dispositif noeud éligible comme parent ayant transmis une réponse LSE_RSP reçue à l'étape 502. Le dispositif noeud exclut ensuite de la liste chaque dispositif noeud éligible comme parent, si le niveau de réception RX_LV indiqué dans lesdites premières informations relativement audit dispositif noeud éligible comme parent est inférieur au premier seuil prédéfini RX_LV_OK ou si le niveau de réception RX_LV indiqué dans lesdites secondes informations relativement audit dispositif noeud éligible comme parent est inférieur au premier seuil prédéfini RX_LV_OK. Puis, pour chaque dispositif noeud éligible comme parent restant dans la liste, le dispositif noeud détermine le minimum MIN_X entre la qualité de réception indiquée dans lesdites premières informations relativement audit dispositif noeud éligible comme parent et la qualité de réception indiquée dans lesdites secondes informations relativement audit dispositif noeud éligible.

Dans une étape 506, le dispositif noeud sélectionne un dispositif noeud parent pour intégrer ou réintégrer le réseau de communication 121. Le dispositif noeud sélectionne comme parent le dispositif noeud éligible comme parent pour lequel le minimum MIN_X est maximum parmi les dispositifs noeuds éligibles comme parents restant dans la liste. Le dispositif noeud souhaitant intégrer ou réintégrer le réseau de communication 121 sélectionne ainsi comme parent le dispositif noeud éligible comme parent pour lequel les conditions de transmission bidirectionnelle entre ledit dispositif noeud et le dispositif noeud éligible comme parent sont les meilleures.

La Fig. 6 illustre schématiquement un algorithme de transmission de données, mis en oeuvre par un dispositif noeud du réseau de communication 121 ou désireux d'intégrer ou de réintégrer le réseau de communication 121.

Tous les messages transmis ou diffusés par chaque dispositif noeud peuvent l'être au niveau maximum d'émission N_Tx_Max possible. Dans un mode de réalisation particulier, les transmissions ascendantes peuvent s'appuyer sur un niveau d'émission ajusté, tel que décrit ci-après en relation avec la Fig. 9, les transmissions descendantes et les diffusions étant quant à elles réalisées au niveau maximum d'émission N_Tx_Max. L'algorithme de la Fig. 6 propose de prendre en compte cette différence de configuration d'interface de transmission de données dudit dispositif noeud.

Dans une étape 601, le dispositif noeud détecte que ledit dispositif noeud a un message à transmettre ou à diffuser.

Dans une étape 602, le dispositif noeud détermine si ledit message est relatif à une diffusion ou à une transmission adressée à un dispositif noeud en particulier. Si ledit message est relatif à une diffusion, une étape 605 est effectuée ; sinon, une étape 603 est effectuée.

Dans l'étape 603, le dispositif noeud détermine si ledit message est relatif à une transmission ascendante ou à une transmission descendante. Si ledit message est relatif à une transmission ascendante, une étape 604 est effectuée ; sinon, si ledit message est relatif à une transmission descendante, l'étape 605 est effectuée.

Dans l'étape 604, le dispositif noeud effectue la transmission dudit message en utilisant une configuration spécifique pour les transmissions ascendantes, résultant de l'application de l'algorithme décrit ci-après en relation avec la Fig. 9. En d'autres termes, le dispositif noeud utilise une configuration qui peut avoir été ajustée depuis la phase d'initialisation.

Dans l'étape 605, le dispositif noeud effectue la transmission dudit message en utilisant le niveau maximum N_Tx_Max d'émission.

La Fig. 7 illustre schématiquement un algorithme, mis en oeuvre par un dispositif noeud du réseau de communication 121, de traitement d'un message de requête d'informations de qualité de réception et de niveau de réception.

Dans une étape 701, le dispositif noeud reçoit une requête LSE_REQ. La requête LSE_REQ est représentative d'une demande d'obtention d'informations de qualité de réception (*e.g.* de rapport signal-à-bruit SNR) et de niveau de réception RX_LV vis-à-vis de signaux émis par ledit dispositif noeud ayant émis ladite requête LSE_REQ et reçus par ledit dispositif noeud exécutant l'algorithme de la Fig. 7, lorsque ledit dispositif noeud exécutant l'algorithme de la Fig. 7 est dispositif noeud parent pour le dispositif noeud ayant émis ladite requête LSE_REQ ou lorsque ledit dispositif noeud exécutant l'algorithme de la Fig. 7 est éligible comme parent pour le dispositif noeud ayant émis ladite requête LSE_REQ.

Dans une étape 702 suivante, le dispositif noeud vérifie si ledit dispositif noeud est concerné par la requête LSE_REQ reçue. En d'autres termes, le dispositif noeud vérifie si ledit dispositif est dispositif noeud parent pour le dispositif noeud ayant émis ladite requête LSE_REQ ou éligible comme parent pour le dispositif noeud ayant émis ladite requête LSE_REQ. Si le dispositif noeud est concerné par la requête LSE_REQ reçue, une étape 703 est effectuée ; sinon, une étape 705 est effectuée.

Dans l'étape 703, le dispositif noeud obtient des informations de qualité de réception et de niveau de réception RX_LV vis-à-vis de signaux émis par le dispositif noeud dont est issue la requête LSE_REQ reçue et reçus par ledit dispositif noeud exécutant l'algorithme de la Fig. 7.

Dans un premier mode de réalisation, lesdites informations sont des informations de qualité de réception (*e.g.* rapport signal-à-bruit SNR) et de niveau de réception RX_LV relatifs à la requête LSE_REQ reçue à l'étape 701.

Dans un second mode de réalisation, lesdites informations sont des informations de qualité de réception (*e.g.* rapport signal-à-bruit SNR) moyenne et de niveau de réception RX_LV moyen relatifs à des signaux émis par le dispositif noeud dont est issue la requête LSE_REQ reçue et reçus, sur une fenêtre glissante prédéfinie, par le dispositif noeud exécutant l'algorithme de la Fig. 7.

Dans une étape 704 suivante, le dispositif noeud construit une réponse LSE_RSP incluant les informations de qualité de réception et de niveau de réception RX_LV obtenues à l'étape 703. Puis, le dispositif noeud transmet la réponse LSE_RSP construite, en réponse à la requête LSE_REQ reçue à l'étape 701. Lorsque que la requête LSE_REQ reçue à l'étape 701 a été spécifiquement adressée audit dispositif noeud, ledit dispositif noeud adresse spécifiquement la réponse LSE_RSP au dispositif noeud ayant transmis la requête LSE_REQ reçue à l'étape 701. En suivant le format décrit en relation avec la Fig. 4, ledit dispositif noeud remplit en conséquence les champs PKT.LNID et PKT.SID en suivant les règles édictées par les spécifications PRIME. Lorsque que la requête LSE_REQ reçue à l'étape 701 a été diffusée, ledit dispositif noeud diffuse la réponse LSE_RSP. En suivant le format décrit en relation avec la Fig. 4, ledit dispositif noeud recopie dans le champ LSE.EUI48 de la réponse LSE_RSP le contenu du champ LSE.EUI48 de la requête LSE_REQ reçue à l'étape 701. Ce cas se présente lorsque le dispositif noeud ayant émis la requête LSE_REQ cherche à intégrer ou à réintégrer le réseau de communication 121 et cherche à déterminer à quel dispositif noeud du réseau de communication 121 se rattacher. Il est ensuite mis fin à l'algorithme de la Fig. 7.

Dans l'étape 705, le dispositif noeud ignore la requête LSE_REQ reçue à l'étape 701, puis il est mis fin à l'algorithme de la Fig. 7.

Il convient de noter que, dans aucune des opérations effectuées dans les étapes 704 et 705, la requête LSE_REQ reçue à l'étape 701 n'est relayée par le dispositif noeud. Cela permet de limiter l'impact des transmissions de requêtes LSE_REQ sur la charge du réseau de communication 121. De plus, il n'y a pas d'intérêt à ce que les requêtes LSE_REQ soient relayées, puisque les requêtes LSE_REQ visent à obtenir de la part de dispositifs noeuds pouvant agir comme parent des informations de qualité et de niveau de réception de signal, ce qui suppose que les dispositifs noeuds concernés soient à portée de communication directe (*i.e.* sans relais).

La Fig. 8 illustre schématiquement un algorithme, mis en oeuvre par un dispositif noeud, de traitement d'un message de réponse incluant des informations de qualité de réception et de niveau de réception.

Dans une étape 801, le dispositif noeud reçoit une réponse LSE_RSP.

Dans une étape 802 suivante, le dispositif noeud vérifie si ledit dispositif noeud est concerné par la réponse LSE_RSP reçue. En d'autres termes, le dispositif noeud vérifie si ladite réponse LSE_RSP est en réponse à une requête LSE_REQ précédemment transmise par ledit dispositif noeud. En suivant le format décrit en relation avec la Fig. 4, les champs PKT.LNID et PKT.SID identifient, conformément aux spécifications PRIME, ledit dispositif noeud lorsque ladite réponse LSE_RSP a été spécifiquement adressée audit dispositif noeud ; et, lorsque ladite réponse LSE_RSP a été diffusée, le champ LSE.EUI48 identifie ledit dispositif noeud. Si le dispositif noeud est concerné par la réponse LSE_RSP reçue, une étape 803 est effectuée ; sinon, une étape 804 est effectuée.

Dans l'étape 803, le dispositif noeud traite la réponse LSE_RSP reçue à l'étape 801, comme déjà détaillé en relation avec les Figs. 3 et 5, ou comme détaillé ci-après en relation avec la Fig. 9. Il est ensuite mis fin à l'algorithme de la Fig. 8.

Dans l'étape 804, le dispositif noeud ignore la réponse LSE_RSP reçue à l'étape 801, puis il est mis fin à l'algorithme de la Fig. 8.

Il convient de noter que, dans aucune des opérations effectuées dans les étapes 803 et 804, la réponse LSE_RSP reçue à l'étape 801 n'est pas relayée par le dispositif noeud. Cela permet de limiter l'impact des transmissions de réponses LSE_RSP sur la charge du réseau de communication 121. De plus, il n'y a pas d'intérêt à ce que les réponses LSE_RSP soient relayées, puisque les réponses LSE_RSP visent à fournir des informations de qualité et de niveau de réception de signal, ce qui suppose que les dispositifs noeuds concernés soient à portée de communication directe (*i.e.* sans relais).

La Fig. 9 illustre schématiquement un algorithme, mis en oeuvre par un dispositif noeud du réseau de communication 121, de configuration d'une interface de transmission de données dudit dispositif noeud. Il est donc considéré dans le cadre de la Fig. 9 que ledit dispositif noeud fait partie du réseau de communication 121 et, en ce sens, est rattaché à un dispositif noeud parent. Le dispositif noeud applique l'algorithme de la Fig. 9 de sorte à limiter des interférences liées aux phénomènes de diaphonie.

Dans une étape 901, le dispositif noeud définit une configuration dudit dispositif noeud pour les transmissions descendantes, de sorte à utiliser le niveau maximum d'émission N_Tx_Max pour lesdites transmissions descendantes. Notons N_Tx_D le niveau d'émission pour les transmissions descendantes. Une telle configuration pour les transmissions descendantes n'est pas destinée à être ajustée dans le temps, de manière à notamment émettre les signaux de balise au maximum de portée dudit dispositif noeud lorsque ledit dispositif noeud est un dispositif noeud commutateur agissant comme relais au sein du réseau de communication.

Ainsi, N_Tx_D = N_Tx_Max, de manière permanente. Par exemple, N_Tx_Max est fixé à 125 dBμV (decibel-microvolts).

Dans une étape 902, le dispositif noeud définit une configuration dudit dispositif noeud pour les transmissions ascendantes, de sorte à utiliser le niveau maximum d'émission N_Tx_Max pour lesdites transmissions ascendantes. Notons N_Tx_U le niveau d'émission pour les transmissions ascendantes. Une telle configuration pour les transmissions ascendantes est, par contre, destinée à être ajustée dans le temps, de manière à limiter les interférences liées aux phénomènes de diaphonie dans le réseau de communication 121.

Ainsi, N_Tx_U = N_Tx_Max, en phase d'initialisation.

Dans une étape 903 suivante, le dispositif noeud transmet, au dispositif noeud parent auquel ledit dispositif noeud est rattaché dans l'arbre formé par ledit réseau de communication 121, une requête LSE_REQ. La requête LSE_REQ est représentative d'une demande d'obtention d'informations de qualité de réception et de niveau de réception RX_LV vis-à-vis de signaux émis par ledit dispositif noeud et reçus par ledit dispositif noeud parent. La requête LSE_REQ suit préférentiellement le format de paquet conforme aux spécifications PRIME, tel que décrit ci-après en relation avec la Fig. 4.

Dans une étape 904 suivante, le dispositif noeud reçoit, en provenance du dispositif noeud parent, une réponse LSE_RSP à la requête LSE_REQ transmise à l'étape 903. La réponse LSE_RSP inclut les informations de qualité de réception et de niveau de réception RX_LV demandées par ledit dispositif noeud par le biais de la requête LSE_REQ. La réponse LSE_RSP suit préférentiellement le format de paquet conforme aux spécifications PRIME, tel que décrit ci-après en relation avec la Fig. 4. Grâce aux messages LSE_REQ et LSE_RSP échangés dans les étapes 903 et 904, le dispositif noeud obtient lesdites informations de qualité de réception et de niveau de réception RX_LV demandées.

Dans une étape 905 suivante, le dispositif noeud extrait, de la réponse LSE_RSP, les informations de qualité de réception et de niveau de réception RX_LV transmises par ledit dispositif noeud parent.

Dans une étape 906 suivante, le dispositif noeud détermine, à partir des informations de qualité de réception (*e.g.* de rapport signal-à-bruit SNR) et de niveau de réception RX_LV extraites, une valeur V de niveau d'émission de signaux à appliquer dans le cadre des transmissions ascendantes, de manière à permettre audit dispositif noeud parent de recevoir lesdits signaux tout en minimisant des interférences liées aux phénomènes de diaphonie. En considérant que l'information de qualité de réception est une information de rapport signal-à-bruit SNR, la valeur V est exprimée en dBμV (décibels-microvolts) de la manière suivante :

$$\begin{cases} V = N\_Tx\_U - min\left((SNR - SNR\_OK), (RX\_LV - RX\_LV\_OK)\right) \\ \quad avec, si\ V > N\_Tx\_Max, V = N\_Tx\_Max \\ \quad et\ si\ V < N\_Tx\_Min, V = N\_Tx\_Min \end{cases}$$

où :

- SNR_OK, exprimé en dB (décibels), est un seuil de rapport signal-à-bruit en dessous duquel il est considéré que la transmission concernée présente des risques non acceptables d'échec ; et
- N_Tx_Min, exprimé en dBμV (décibels-microvolts), est un niveau d'émission minimum pour transmettre des données dans le réseau de communication 121.

Par exemple, SNR_OK est fixé à 10 dB (décibels) et N_Tx_Min est fixé à 50 dBμV (décibels-microvolts).

On note donc que la détermination de la valeur V comprend :

- une détermination d'une première différence entre ladite information de rapport signal-à-bruit SNR et le rapport signal à bruit minimum SNR _OK;
- une détermination d'une seconde différence entre ladite information de niveau de réception RX_LV et le niveau réception minimum RX_LV_OK ;
- une détermination d'une différence minimale entre la première et la seconde différence ;
- un calcul du niveau d'émission V en soustrayant ladite différence minimale au niveau émission N_Tx_U utilisé par ledit premier dispositif noeud pour émettre les signaux auxquels l'information de qualité de réception (i.e. l'information de rapport signal-à-bruit SNR) et l'information de niveau de réception RX_LV se rapportent ; et,

- un remplacement du niveau d'émission V par le niveau d'émission maximum N_Tx_Max si V est supérieur au niveau d'émission maximum N Tx Max, et par le niveau d'émission minimum N_Tx_Min si V est inférieur au niveau d'émission minimum N_Tx_Min.

En fixant une valeur minimale au niveau d'émission V, ici égal à N_Tx_Min, on assure des transmissions correctes ce qui minimise les phénomènes de diaphonie sur le réseau.

De plus, en donnant une valeur minimale au niveau d'émission V, on évite des dégradations par un bruit de communication.

De même, en limitant le niveau d'émission V à une valeur maximale N_Tx_Max, on évite des phénomènes de saturation.

On remarque par ailleurs que le calcul de la valeur V de niveau d'émission est basé sur deux critères différents : une information de qualité de réception sous forme d'un rapport signal-à-bruit SNR, et une information de niveau de réception RX_LV. Il est important de prendre en compte ces deux critères car ils sont interdépendants. Par exemple, si on ne considérait que l'information de qualité de réception pour ajuster le niveau d'émission, une valeur élevée du rapport signal-à-bruit SNR provoquerait une baisse du niveau d'émission V, ce qui pourrait aboutir à une baisse du niveau de réception RX_LV jusqu'à une valeur inacceptable. Dans un autre exemple, si on ne considérait que l'information de niveau de réception RX_LV pour ajuster le niveau d'émission, une valeur élevée du niveau de réception RX_LV provoquerait une baisse du niveau d'émission V, ce qui pourrait aboutir à une baisse de la qualité de réception jusqu'à une valeur inacceptable.

Dans une étape 907 suivante, le dispositif noeud vérifie si un ajustement du niveau d'émission pour les transmissions ascendantes est souhaitable, *i.e.* lorsque la valeur V est différente du niveau d'émission N_Tx_U utilisé pour effectuer les transmissions auxquelles sont relatives les informations de qualité de réception (*e.g.* de rapport signal-à-bruit SNR) et de niveau de réception RX_LV extraites. Si un ajustement du niveau d'émission pour les transmissions ascendantes est souhaitable, une étape 908 est effectuée ; sinon, une étape 909 est effectuée.

Dans l'étape 908, le dispositif noeud définit une configuration ajustée dudit dispositif noeud pour les transmissions ascendantes, de sorte à utiliser le niveau d'émission défini pour la valeur V déterminée à l'étape 906. La valeur V peut correspondre à une baisse ou à une augmentation du niveau d'émission pour les transmissions ascendantes. La configuration du dispositif noeud pour les transmissions descendantes demeure inchangée. Ensuite, l'étape 909 est effectuée.

Dans l'étape 909, le dispositif noeud applique un délai prédéterminé, qui peut être différent du délai appliqué à l'étape 310 de la Fig. 3, avant de réitérer l'étape 903. Il en découle que, selon l'algorithme de la Fig. 9, le dispositif noeud vérifie périodiquement la pertinence de la configuration dudit dispositif noeud pour les transmissions ascendantes. De manière alternative, il est possible de déclencher sur demande une réitération de l'algorithme de la Fig. 9 à partir de l'étape 903. La valeur du délai appliqué à l'étape 909 peut en outre être dynamiquement modifiée, par exemple en fonction d'une rapidité d'évolution de la qualité de réception et/ou du niveau de réception RX_LV indiqués par le dispositif noeud parent au fil desdites réitérations de l'algorithme de la Fig. 9. L'application du délai à l'étape 909 est préférentiellement débrayable

Lorsque le dispositif noeud n'est plus rattaché au même dispositif noeud parent par exécution de l'algorithme de la Fig. 3, l'algorithme de la Fig. 9 peut être réitéré depuis le début avec le nouveau dispositif noeud parent en reprenant le niveau d'émission dernièrement utilisé avec le précédent noeud parent. L'algorithme de la Fig. 3 a en effet montré que le rattachement au nouveau dispositif noeud parent entraînerait une meilleure stabilité du réseau de communication 121 selon la configuration actuelle pour les transmissions ascendantes. En variante, l'algorithme de la Fig. 9 peut être réitéré depuis le début avec le nouveau dispositif noeud parent en utilisant le niveau maximum d'émission N_Tx_Max pour les transmissions ascendantes et les transmissions de requêtes LSE_REQ.

Lorsque la topologie du réseau de communication 121 change de sorte que le dispositif noeud n'est plus rattaché au même dispositif noeud parent sans que la re-sélection de dispositif noeud parent ne soit du fait de l'algorithme de la Fig. 3 (*e.g.* déconnexion du dispositif noeud parent du réseau de communication 121), l'algorithme de la Fig. 5 permet de sélectionner un nouveau dispositif noeud parent, puis l'algorithme de la Fig. 9 peut être réitéré depuis le début avec le nouveau dispositif noeud parent dudit dispositif noeud. La phase d'initialisation est donc ainsi réitérée, le dispositif noeud se configurant alors de sorte à utiliser le niveau maximum d'émission N_Tx_Max pour les transmissions des requêtes LSE_REQ.

Ainsi, par application de l'algorithme de la Fig. 9, le niveau d'émission utilisé pour les transmissions ascendantes est ajusté. Le niveau d'émission utilisé pour transmettre les requêtes LSE_REQ dans le cadre de l'algorithme de la Fig. 3 doit alors être le même que pour les transmissions ascendantes, alors que le niveau d'émission utilisé pour transmettre les requêtes LSE_REQ dans le cadre de l'algorithme de la Fig. 5 doit alors être le niveau maximum d'émission N_Tx_Max. En effet, pour permettre audit dispositif noeud de déterminer quel dispositif noeud est le mieux adapté pour prendre le rôle de dispositif noeud parent vis-à-vis dudit dispositif noeud, il est judicieux que les transmissions de signaux servant à définir les informations de qualité de réception et de niveau de réception soient effectuées avec un niveau d'émission identique, de manière à pouvoir effectuer les comparaisons de l'étape 307. Le niveau d'émission pour les transmissions vers le dispositif noeud parent étant ajusté par l'algorithme de la Fig. 9, le niveau d'émission pour les transmissions vers les dispositifs noeuds éligibles comme parents doivent l'être aussi.

Il est possible que le réseau de communication 121 comporte des dispositifs noeuds conformes aux spécifications PRIME et n'ayant pas connaissance des mécanismes relatifs aux requêtes LSE_REQ et aux réponses LSE_RSP, et que ces dispositifs noeuds relaient lesdites requêtes LSE_REQ et lesdites réponses LSE_RSP. De manière à ne pas surcharger le réseau de communication 121, les mécanismes relatifs aux requêtes LSE_REQ et aux réponses LSE_RSP peuvent alors être débrayable et les dispositifs noeuds concernés utilisent alors le niveau d'émission maximum N_Tx_Max pour réaliser les transmissions ascendantes, et utilisent des critères conventionnels pour sélectionner le dispositif noeud auquel se rattacher dans le réseau de communication 121.

**Revendications**

1. Procédé de sélection de dispositif noeud parent dans un réseau de communication (121) sous forme d'arbre de dispositifs noeuds implémenté sur un réseau d'alimentation électrique, des dispositifs noeuds pouvant être relais (130 ; 131 ; 133 ; 135) entre un dispositif noeud racine de l'arbre et d'autres dispositifs noeuds (134 ; 136 ; 137 ; 138 ; 139) qui leur sont respectivement rattachés, **caractérisé en ce qu'**au moins un premier dispositif noeud effectue les étapes suivantes :

   - obtenir (301, 305 ; 503), auprès de plusieurs seconds dispositifs noeuds pouvant prendre un rôle de dispositif noeud parent pour ledit dispositif noeud au sein du réseau de communication, des premières informations de qualité de réception et de niveau de réception vis-à-vis de signaux, lesdits signaux ayant été émis par le premier dispositif noeud et reçus par les seconds dispositifs noeuds ;
   - obtenir (302, 306 ; 504) des secondes informations de qualité de réception et de niveau de réception vis-à-vis de signaux, lesdits signaux ayant été émis par chaque second dispositif noeud et reçus par le premier dispositif noeud ;
   - déterminer, pour chaque second dispositif noeud, un minimum de qualité de réception entre la première information de qualité de réception et la seconde information de qualité de réception ; et
   - sélectionner comme dispositif noeud parent le second dispositif noeud pour lequel la première information de niveau de réception est représentative d'un niveau de réception supérieur à un seuil prédéfini, pour lequel la seconde information de niveau de réception est aussi représentative d'un niveau de réception supérieur au seuil prédéfini, et pour lequel ledit minimum déterminé est le maximum parmi lesdits minimums déterminés.

2. Procédé selon la revendication 1, **caractérisé en ce que** le premier dispositif noeud obtient lesdites premières informations de qualité de réception et de niveau de réception par envoi (303 ; 501 ; 903) d'une requête, et **en ce que** lesdites premières informations correspondent à une qualité de réception et/ou un niveau de réception relatifs à ladite requête.

3. Procédé selon la revendication 2, **caractérisé en ce que** lesdites secondes informations correspondent à une qualité de réception et/ou un niveau de réception relatifs à une réponse à ladite requête.

4. Procédé selon la revendication 1, **caractérisé en ce que** lesdites premières informations correspondent à une qualité de réception et/ou un niveau de réception relatifs à des signaux transmis par le premier dispositif noeud et reçus par ledit second dispositif noeud parent sur une fenêtre glissante prédéfinie, et **en ce que** lesdites secondes informations correspondent à une qualité de réception et/ou un niveau de réception relatifs à des signaux transmis par ledit second dispositif noeud et reçus par le premier dispositif noeud sur la fenêtre glissante prédéfinie.

5. Procédé selon l'une quelconque des revendications 1 à 4, **caractérisé en ce que** ledit procédé est périodiquement réitéré (310).

6. Procédé selon l'une quelconque des revendications 1 à 5, **caractérisé en ce que**, le premier dispositif noeud étant rattaché à un dispositif noeud parent dans le réseau de communication, le premier dispositif noeud obtient lesdites premières et secondes informations vis-à-vis du dispositif noeud parent et vis-à-vis d'au moins un dispositif noeud éligible comme parent, et **en ce que** le premier dispositif noeud décide de changer (309) ou pas de dispositif noeud parent en fonction desdites premières et secondes informations obtenues.

7. Procédé selon la revendication 6, **caractérisé en ce que**, des phénomènes de diaphonie pouvant apparaître, chaque transmission dans le réseau de communication en direction du dispositif noeud racine étant ascendante et chaque transmission en direction inverse étant descendante, le premier dispositif noeud effectue les étapes suivantes :

- obtenir (903, 904) auprès du dispositif noeud parent lesdites premières informations de qualité de réception et de niveau de réception ;
- utiliser, pour transmettre (605) des signaux dans le cadre des transmissions descendantes, un niveau d'émission figé à un niveau d'émission maximum dudit dispositif noeud ; et
- ajuster (906, 908), en fonction desdites informations obtenues, un niveau d'émission dudit dispositif noeud utilisé pour transmettre (604) des signaux dans le cadre des transmissions ascendantes, de sorte à continuer de permettre audit dispositif noeud parent de recevoir lesdits signaux tout en minimisant des interférences liées aux phénomènes de diaphonie.

**8.** Procédé selon la revendication 7, **caractérisé en ce que**, la première information de qualité de réception obtenue auprès du dispositif noeud parent est une information de rapport signal-à-bruit (SNR), et **en ce que**, pour déterminer le niveau d'émission V à appliquer dans le cadre de transmissions ascendantes, le premier dispositif noeud met en oeuvre les étapes suivantes:

- déterminer une première différence entre ladite information de rapport signal-à-bruit (SNR) et un rapport signal à bruit minimum prédéfini (SNR_OK) ;
- déterminer une seconde différence entre ladite information de niveau de réception (RX_LV) et un niveau réception minimum prédéfini (RX_LV_OK) ;
- déterminer une différence minimale entre la première et la seconde différence ;
- calculer le niveau d'émission V en soustrayant ladite différence minimale à un niveau émission (N_Tx_U) utilisé par le premier dispositif noeud pour émettre les signaux auxquels la première information de qualité de réception et la première information de niveau de réception se rapportent ;
- remplacer le niveau d'émission V par le niveau d'émission maximum (N_Tx_Max) si V est supérieur au niveau d'émission maximum, et par un niveau d'émission minimum prédéfini (N_Tx_Min) si V est inférieur au niveau d'émission minimum prédéfini.

**9.** Procédé selon l'une quelconque des revendications 1 à 5, **caractérisé en ce que**, le premier dispositif noeud étant déconnecté du réseau de communication, le premier dispositif noeud diffuse (501) une requête représentative d'une demande d'obtention desdites premières informations et sélectionne (506) le dispositif noeud parent pour intégrer ou réintégrer le réseau de communication parmi lesdits seconds dispositifs noeuds, en fonction desdites premières et secondes informations obtenues.

**10.** Dispositif noeud destiné à être utilisé dans un réseau de communication (121) sous forme d'arbre de dispositifs noeuds implémenté sur un réseau d'alimentation électrique, des dispositifs noeuds pouvant être relais (130 ; 131 ; 133 ; 135) entre un dispositif noeud racine de l'arbre et d'autres dispositifs noeuds (134 ; 136 ; 137 ; 138 ; 139) qui leur sont respectivement rattachés, **caractérisé en ce que** le dispositif noeud, dit premier dispositif noeud, comporte :

- des moyens pour obtenir (301, 305 ; 503), auprès de plusieurs seconds dispositif noeuds pouvant prendre un rôle de dispositif noeud parent pour le premier dispositif noeud au sein du réseau de communication, des premières informations de qualité de réception et de niveau de réception vis-à-vis de signaux, lesdits signaux ayant été émis par le premier dispositif noeud et reçus par les seconds dispositifs noeuds ;
- des moyens pour obtenir (302, 306 ; 504) des secondes informations de qualité de réception et de niveau de réception vis-à-vis de signaux, lesdits signaux ayant été émis par chaque second dispositif noeud et reçus par le premier dispositif noeud ;
- des moyens pour déterminer, pour chaque second dispositif noeud, un minimum de qualité de réception entre la première information de qualité de réception et la seconde information de qualité de réception ; et
- des moyens pour sélectionner comme dispositif noeud parent le second dispositif noeud pour lequel la première information de niveau de réception est représentative d'un niveau de réception supérieur à un seuil prédéfini, pour lequel la seconde information de niveau de réception est aussi représentative d'un niveau de réception supérieur au seuil prédéfini, et pour lequel ledit minimum déterminé est le maximum parmi lesdits minimums déterminés.

**11.** Programme d'ordinateur, **caractérisé en ce qu'**il comprend des instructions pour mettre en oeuvre, par un dispositif noeud, le procédé selon l'une quelconque des revendications 1 à 9, lorsque ledit programme est exécuté par un processeur dudit dispositif noeud.

12. Moyens de stockage, **caractérisés en ce qu'**ils stockent un programme d'ordinateur comprenant des instructions pour mettre en oeuvre, par un dispositif noeud, le procédé selon l'une quelconque des revendications 1 à 9, lorsque ledit programme est exécuté par un processeur dudit dispositif noeud.

**Patentansprüche**

1. Verfahren zur Auswahl einer Elternknotenvorrichtung in einem Kommunikationsnetz (121) in Form eines Baums von Knotenvorrichtungen, der auf einem elektrischen Versorgungsnetz implementiert ist, wobei Knotenvorrichtungen Relais (130; 131; 133; 135) zwischen einer Wurzelknotenvorrichtung des Baums und anderen Knotenvorrichtungen (134; 136; 137; 138; 139), die jeweils mit ihnen verbunden sind, sein können, **dadurch gekennzeichnet, dass** mindestens eine erste Knotenvorrichtung die folgenden Schritte ausführt:

- von mehreren zweiten Knotenvorrichtungen, die eine Rolle einer Elternknotenvorrichtung für die Knotenvorrichtung in dem Kommunikationsnetz übernehmen können, Erhalt (301, 305; 503) von ersten Informationen zu Empfangsqualität und Empfangsniveau gegenüber Signalen, wobei die Signale von der ersten Knotenvorrichtung entsandt und von den zweiten Knotenvorrichtungen empfangen wurden;
- Erhalt (302, 306; 504) von zweiten Informationen zu Empfangsqualität und Empfangsniveau gegenüber Signalen, wobei die Signale von jeder zweiten Knotenvorrichtung entsandt und von der ersten Knotenvorrichtung empfangen wurden;
- für jede zweite Knotenvorrichtung Bestimmung eines Empfangsqualitätsminimums zwischen der ersten Information zur Empfangsqualität und der zweiten Information zur Empfangsqualität; und
- Auswahl der zweiten Knotenvorrichtung als Elternknotenvorrichtung, bei der die erste Information zum Empfangsniveau für ein Empfangsniveau über einer vordefinierten Schwelle repräsentativ ist, bei der die zweite Information zum Empfangsniveau auch für ein Empfangsniveau über der vordefinierten Schwelle repräsentativ ist, und bei der das bestimmte Minimum das Maximum unter den bestimmten Minima ist.

2. Verfahren nach Anspruch 1, **dadurch gekennzeichnet, dass** die erste Knotenvorrichtung die ersten Informationen zur Empfangsqualität und zum Empfangsniveau durch Senden (303; 501; 903) einer Anfrage erhält, und dass die ersten Informationen einer Empfangsqualität und/oder einem Empfangsniveau in Zusammenhang mit der Anfrage entsprechen.

3. Verfahren nach Anspruch 2, **dadurch gekennzeichnet, dass** die zweiten Informationen einer Empfangsqualität und/oder einem Empfangsniveau in Zusammenhang mit einer Antwort auf die Anfrage entsprechen.

4. Verfahren nach Anspruch 1, **dadurch gekennzeichnet, dass** die ersten Informationen einer Empfangsqualität und/oder einem Empfangsniveau in Zusammenhang mit Signalen entsprechen, die von der ersten Knotenvorrichtung übertragen und von der zweiten Elternknotenvorrichtung auf einem vordefinierten Gleitfenster empfangen werden, und dass die zweiten Informationen einer Empfangsqualität und/oder einem Empfangsniveau in Zusammenhang mit Signalen entsprechen, die von der zweiten Knotenvorrichtung übertragen und von der ersten Knotenvorrichtung auf dem vordefinierten Gleitfenster empfangen werden.

5. Verfahren nach einem der Ansprüche 1 bis 4, **dadurch gekennzeichnet, dass** das Verfahren periodisch reiteriert (310) wird.

6. Verfahren nach einem der Ansprüche 1 bis 5, **dadurch gekennzeichnet, dass**, wobei die erste Knotenvorrichtung mit einer Elternknotenvorrichtung in dem Kommunikationsnetz verbunden ist, die erste Knotenvorrichtung die ersten und zweiten Informationen gegenüber der Elternknotenvorrichtung und gegenüber mindestens einer als Eltern wählbaren Knotenvorrichtung erhält, und dass die erste Knotenvorrichtung entscheidet, die Elternknotenvorrichtung in Abhängigkeit von den ersten und zweiten erhaltenen Informationen zu wechseln (309) oder nicht.

7. Verfahren nach Anspruch 6, **dadurch gekennzeichnet, dass**, wobei Diaphoniephänomene auftreten können, wobei jede Übertragung in dem Kommunikationsnetz in Richtung der Wurzelknotenvorrichtung aufsteigend ist und jede Übertragung in umgekehrte Richtung absteigend ist, die erste Knotenvorrichtung die folgenden Schritte ausführt:

- von der Elternknotenvorrichtung Erhalt (903, 904) der ersten Informationen zu Empfangsqualität und Empfangsniveau;

- Verwendung, um Signale im Rahmen der absteigenden Übertragungen zu übertragen (605), eines Sendeniveaus, das auf ein maximales Sendeniveau der Knotenvorrichtung festgesetzt ist; und
- in Abhängigkeit von den erhaltenen Informationen Anpassung (906, 908) eines Sendeniveaus der Knotenvorrichtung, die zur Übertragung (604) der Signale im Rahmen der aufsteigenden Übertragungen verwendet wird, um es weiterhin der Elternknotenvorrichtung zu ermöglichen, die Signale zu erhalten, wobei Interferenzen in Verbindung mit den Diaphoniephänomenen minimiert werden.

8. Verfahren nach Anspruch 7, **dadurch gekennzeichnet, dass** die erste Information zur Empfangsqualität, die von der Elternknotenvorrichtung erhalten wird, eine Information zu einem Signal-Rausch-Verhältnis (SNR) ist, und dass zur Bestimmung des im Rahmen von aufsteigenden Übertragungen anzuwendenden Sendeniveaus V die erste Knotenvorrichtung die folgenden Schritte einsetzt:

- Bestimmung eines ersten Unterschieds zwischen der Information zum Signal-Rausch-Verhältnis (SNR) und einem vordefinierten minimalen Signal-Rausch-Verhältnis (SNR_OK);
- Bestimmung eines zweiten Unterschieds zwischen der Information zum Empfangsniveau (RX_LV) und einem vordefinierten minimalen Empfangsniveau (RX_LV_OK);
- Bestimmung eines minimalen Unterschieds zwischen dem ersten und dem zweiten Unterschied;
- Berechnung des Sendeniveaus V durch Abziehen des minimalen Unterschieds von einem Sendeniveau (N_Tx_U), das von der ersten Knotenvorrichtung verwendet wird, um die Signale zu entsenden, auf die sich die erste Information zur Empfangsqualität und die erste Information zum Empfangsniveau beziehen;
- Ersatz des Sendeniveaus V durch das maximale Sendeniveau (N_Tx_Max), wenn V größer als das maximale Sendeniveau ist, und durch ein vordefiniertes minimales Sendeniveau (N_Tx_Min), wenn V kleiner als das vordefinierte minimale Sendeniveau ist.

9. Verfahren nach einem der Ansprüche 1 bis 5, **dadurch gekennzeichnet, dass**, wobei die erste Knotenvorrichtung von dem Kommunikationsnetz getrennt ist, die erste Knotenvorrichtung eine Anfrage verbreitet (501), die für eine Anforderung nach Erhalt der ersten Informationen repräsentativ ist, und die Elternknotenvorrichtung auswählt (506), um das Kommunikationsnetz unter den zweiten Knotenvorrichtungen in Abhängigkeit von den ersten und zweiten erhaltenen Informationen zu integrieren oder wieder zu integrieren.

10. Knotenvorrichtung, die dazu bestimmt ist, in einem Kommunikationsnetz (121) in Form eines Baums von Knotenvorrichtungen, der auf einem elektrischen Versorgungsnetz implementiert ist, verwendet zu werden, wobei Knotenvorrichtungen Relais (130; 131; 133; 135) zwischen einer Wurzelknotenvorrichtung des Baums und anderen Knotenvorrichtungen (134; 136; 137; 138; 139), die jeweils mit ihnen verbunden sind, sein können, **dadurch gekennzeichnet, dass** die Knotenvorrichtung, erste Knotenvorrichtung genannt, umfasst:

- Mittel, um von mehreren zweiten Knotenvorrichtungen, die eine Rolle einer Elternknotenvorrichtung für die erste Knotenvorrichtung in dem Kommunikationsnetz übernehmen können, erste Informationen zu Empfangsqualität und Empfangsniveau gegenüber Signalen zu erhalten (301, 305; 503), wobei die Signale von der ersten Knotenvorrichtung entsandt und von den zweiten Knotenvorrichtungen empfangen wurden;
- Mittel, um zweite Informationen zu Empfangsqualität und Empfangsniveau gegenüber Signalen zu erhalten (302, 306; 504), wobei die Signale von jeder zweiten Knotenvorrichtung entsandt und von der ersten Knotenvorrichtung empfangen wurden;
- Mittel, um für jede zweite Knotenvorrichtung ein Empfangsqualitätsminimum zwischen der ersten Information zur Empfangsqualität und der zweiten Information zur Empfangsqualität zu bestimmen; und
- Mittel, um die zweite Knotenvorrichtung als Elternknotenvorrichtung auszuwählen, bei der die erste Information zum Empfangsniveau für ein Empfangsniveau über einer vordefinierten Schwelle repräsentativ ist, bei der die zweite Information zum Empfangsniveau auch für ein Empfangsniveau über der vordefinierten Schwelle repräsentativ ist, und bei der das bestimmte Minimum das Maximum unter den bestimmten Minima ist.

11. Computerprogramm, **dadurch gekennzeichnet, dass** es Befehle umfasst, um durch eine Knotenvorrichtung das Verfahren nach einem der Ansprüche 1 bis 9 einzusetzen, wenn das Programm von einem Prozessor der Knotenvorrichtung ausgeführt wird.

12. Speichermittel, **dadurch gekennzeichnet, dass** sie ein Computerprogramm speichern, umfassend Befehle, um durch eine Knotenvorrichtung das Verfahren nach einem der Ansprüche 1 bis 9 einzusetzen, wenn das Programm von einem Prozessor der Knotenvorrichtung ausgeführt wird.

**Claims**

1.  Method of parent node device selection in a communication network (121) in the form of a tree of node devices which is implemented on an electrical power supply network, some node devices possibly being relays (130; 131; 133; 135) between a root node device of the tree and other node devices (134; 136; 137; 138; 139) which are respectively attached to them, **characterized in that** at least a first node device performs the following steps:

    - obtaining (301, 305; 503), at several second node devices that are able to take a role of parent node device for the said node device within the communication network, first items of information in respect of quality of reception and of level of reception in relation to signals, the said signals having been sent by the first node device and received by the second node devices;
    - obtaining (302, 306; 504) second items of information in respect of quality of reception and of level of reception in relation to signals, the said signals having been sent by each second node device and received by the first node device;
    - determining, for each second node device, a minimum of quality of reception between the first item of information in respect of quality of reception and the second item of information in respect of quality of reception; and
    - selecting as parent node device the second node device for which the first item of information in respect of level of reception is representative of a level of reception above a predefined threshold, for which the second item of information in respect of level of reception is also representative of a level of reception above the predefined threshold, and for which the said determined minimum is the maximum from among the said determined minima.

2.  Method according to Claim 1, **characterized in that** the first node device obtains the said first items of information in respect of quality of reception and of level of reception by dispatching (303; 501; 903) an enquiry, and **in that** the said first items of information correspond to a quality of reception and/or a level of reception that relate to the said enquiry.

3.  Method according to Claim 2, **characterized in that** the said second items of information correspond to a quality of reception and/or a level of reception that relate to a response to the said enquiry.

4.  Method according to Claim 1, **characterized in that** the said first items of information correspond to a quality of reception and/or a level of reception that relate to signals transmitted by the first node device and received by the said second parent node device over a predefined sliding window, and **in that** the said second items of information correspond to a quality of reception and/or a level of reception that relate to signals transmitted by the said second node device and received by the first node device over the predefined sliding window.

5.  Method according to any one of Claims 1 to 4, **characterized in that** the said method is periodically repeated (310).

6.  Method according to any one of Claims 1 to 5, **characterized in that**, the first node device being attached to a parent node device in the communication network, the first node device obtains the said first and second items of information in relation to the parent node device and in relation to at least one node device eligible as parent, and **in that** the first node device decides whether or not to change (309) parent node device as a function of the said first and second items of information obtained.

7.  Method according to Claim 6, **characterized in that**, crosstalk phenomena possibly occurring, each transmission in the communication network in the direction of the root node device being upgoing and each transmission in the reverse direction being downgoing, the first node device performs the following steps:

    - obtaining (903, 904) at the parent node device the said first items of information in respect of quality of reception and level of reception;
    - using, to transmit (605) signals within the framework of the downgoing transmissions, a send level frozen at a maximum send level of the said node device; and
    - adjusting (906, 908), as a function of the said items of information obtained, a send level of the said node device used to transmit (604) signals within the framework of the upgoing transmissions, so as to continue to allow the said parent node device to receive the said signals while minimizing interference related to the crosstalk phenomena.

8.  Method according to Claim 7, **characterized in that**, the first item of information in respect of quality of reception obtained at the parent node device is a signal-to-noise ratio (SNR) item of information, and **in that**, to determine the send level V to be applied within the framework of upgoing transmissions, the first node device implements the following steps:

- determining a first difference between the said signal-to-noise ratio (SNR) item of information and a predefined minimum signal-to-noise ratio (SNR_OK) ;
- determining a second difference between the said item of information in respect of level of reception (RX_LV) and a predefined minimum level of reception (RX_LV_OK) ;
- determining a minimum difference between the first and the second difference;
- calculating the send level V by subtracting the said minimum difference from a send level (N_Tx_U) used by the first node device to send the signals to which the first item of information in respect of quality of reception and the first item of information in respect of level of reception pertain;
- replacing the send level V by the maximum send level (N_Tx_Max) if V is above the maximum send level, and by a predefined minimum send level (N_Tx_Min) if V is below the predefined minimum send level.

9. Method according to any one of Claims 1 to 5, **characterized in that**, the first node device being disconnected from the communication network, the first node device broadcasts (501) an enquiry representative of a request to obtain the said first items of information and selects (506) the parent node device to integrate or reintegrate the communication network from among the said second node devices, as a function of the said first and second items of information obtained.

10. Node device intended to be used in a communication network (121) in the form of a tree of node devices which is implemented on an electrical power supply network, some node devices possibly being relays (130; 131; 133; 135) between a root node device of the tree and other node devices (134; 136; 137; 138; 139) which are respectively attached to them, **characterized in that** the node device, termed the first node device, comprises:

- means for obtaining (301, 305; 503), at several second node devices that are able to take a role of parent node device for the first node device within the communication network, first items of information in respect of quality of reception and of level of reception in relation to signals, the said signals having been sent by the first node device and received by the second node devices;
- means for obtaining (302, 306; 504) second items of information in respect of quality of reception and of level of reception in relation to signals, the said signals having been sent by each second node device and received by the first node device;
- means for determining, for each second node device, a minimum of quality of reception between the first item of information in respect of quality of reception and the second item of information in respect of quality of reception; and
- means for selecting as parent node device the second node device for which the first item of information in respect of level of reception is representative of a level of reception above a predefined threshold, for which the second item of information in respect of level of reception is also representative of a level of reception above the predefined threshold, and for which the said determined minimum is the maximum from among the said determined minima.

11. Computer program, **characterized in that** it comprises instructions for implementing, by a node device, the method according to any one of Claims 1 to 9, when the said program is executed by a processor of the said node device.

12. Storage means, **characterized in that** they store a computer program comprising instructions for implementing, by a node device, the method according to any one of Claims 1 to 9, when the said program is executed by a processor of the said node device.

Fig. 1

Fig. 2

301 — Obtention de premières informations SNR et RX_LV de la part du dispositif parent actuel

302 — Obtention de secondes informations SNR et RX_LV complémentaires auxdites premières informations SNR et RX_LV

303 — Transmission à destination d'au moins un dispositif éligible comme parent, ou diffusion, d'une requête LSE_REQ

304 — Réception, en provenance d'au moins un dispositif éligible comme parent, d'au moins une réponse LSE_RSP respective

305 — Extraction de troisièmes informations SNR et RX_LV de chaque réponse LSE_RSP reçue

306 — Obtention de quatrièmes informations SNR et RX_LV complémentaires auxdites premières informations SNR et RX_LV

307 — Comparaisons sur la base des premières, secondes, troisièmes et quatrièmes informations SNR et RX_LV

Changement de dispositif nœud parent ?    oui    non

308

309 — Re-sélection de dispositif parent

310 — Délai

Fig. 3

401 | 402 | 403

**Fig. 4**

501 — Diffusion d'une requête LSE_REQ
et attente pendant une durée T0

502 — Réception, en provenance d'au moins un dispositif éligible
comme parent, d'au moins une réponse LSE_RSP respective ? **non**

**oui**

503 — Extraction de premières informations SNR et
RX_LV de chaque réponse LSE_RSP reçue

504 — Obtention de secondes informations SNR et RX_LV
complémentaires auxdites premières informations SNR et RX_LV

505 — Comparaisons sur la base des premières et secondes
informations SNR et RX_LV

506 — Sélection d'un dispositif parent pour intégrer le
réseau de communication hiérarchisé, en
fonction du résultat de la comparaison

**Fig. 5**

601 — Détection d'un message à transmettre

non — Diffusion? — oui

602

oui — Transmission ascendante ? — non

603

604
Utilisation d'une configuration correspondant à un niveau d'émission ajusté

605
Utilisation d'une configuration correspondant à un niveau d'émission maximal

Fig. 6

701 — Réception d'une requête LSE_REQ

oui — Dispositif nœud concerné ? — non

702

703
Obtention d'informations SNR et RX_LV

705
Message ignoré

Transmission d'une réponse LSE_RSP — 704

Fig. 7

801 — Réception d'une réponse LSE_RSP

oui — 802 — Dispositif nœud concerné ? — non

803 — Traitement du message

804 — Message ignoré

Fig. 8

901 — Configuration du dispositif pour des transmissions descendantes à un niveau maximum

902 — Configuration du dispositif pour des transmissions ascendantes au niveau maximum

903 — Transmission au dispositif parent d'une requête LSE_REQ

904 — Réception du dispositif parent d'une réponse LSE_RSP

905 — Extraction d'informations SNR et RX_LV

906 — Détermination, grâce aux informations SNR et RX_LV, d'un niveau d'émission pour les transmissions ascendantes

oui — 907 — Ajustement? — non

908 — Reconfiguration du dispositif pour les transmissions ascendantes

909 — Délai

Fig. 9

**EP 2 953 270 B1**

**RÉFÉRENCES CITÉES DANS LA DESCRIPTION**

**Documents brevets cités dans la description**

- US 2012294377 A